(19) **Europäisches Patentamt**
**European Patent Office**
**Office européen des brevets**

(11) **EP 2 911 349 B1**

(12) **EUROPEAN PATENT SPECIFICATION**

(45) Date of publication and mention
of the grant of the patent:
**24.02.2016 Bulletin 2016/08**

(51) Int Cl.:
***H04L 12/721*** *(2013.01)*

(21) Application number: **14156373.4**

(22) Date of filing: **24.02.2014**

(54) **Method and system for link prediction in mobile computing**

Verfahren und System zur Verbindungsvorhersage bei mobiler Datenverarbeitung

Procédé et système de prévision de liaison dans un environnement informatique mobile

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.08.2015 Bulletin 2015/35**

(73) Proprietor: **Deutsche Telekom AG
53113 Bonn (DE)**

(72) Inventors:
• **Hui, Pan
Hong Kong (CN)**

• **Huang, Di
Hong Kong (CN)**
• **Peylo, Christoph
49401 Damme (DE)**

(74) Representative: **Vossius & Partner
Patentanwälte Rechtsanwälte mbB
Siebertstrasse 3
81675 München (DE)**

(56) References cited:
**EP-A1- 2 106 068      US-A1- 2008 279 101
US-A1- 2009 310 485      US-A1- 2010 061 255**

**Description**

**BACKGROUND**

The present invention is related to mining link pattern in mobile computing. Direct future links are mined with the help of statistical methods.

Mobile computing has been proposed for long. It involves human and computer interaction. There are many components in mobile computing such as communication, hardware such as smart phones and software in both mobile device and server. Despite the fact that hardware such as a smartphone and software in mobile devices have been maturely developed, the quality of mobile computing is still poor due to device-to-device communication limitations.

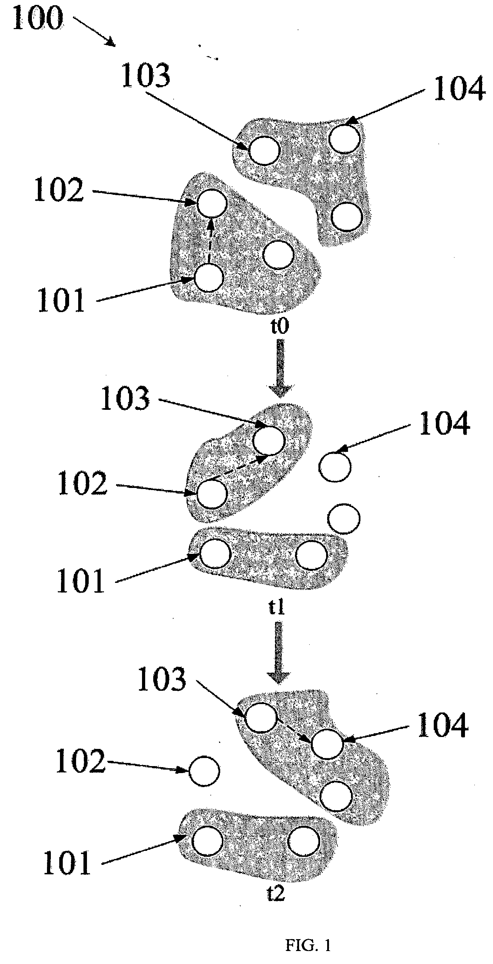

In mobile computing, systems that involve device-to-device communication have several forms like pocket switched networks (PSN) (Hui, Pan, et al. "Pocket switched networks and human mobility in conference environments." Proceedings of the 2005 ACM SIGCOMM workshop on Delay-tolerant networking. ACM, 2005), vehicular networks and mobile ad-hoc networks. Take PSN as an example, it exploits mobile devices as intermediate nodes to relay data with a certain delay tolerance. Usually there are no direct routes between node pairs so routing in PSN has to perform store-carry-and-forward, which means that if one node wants to send a message to another, it has to first store the message and then carry it. In each snapshot of the network, there are some nodes which are connected while others are disconnected. For example in FIG. 1, nodes in shaded areas are connected with each other but nodes in different areas are disconnected. In traditional network protocols, packet sending will fail if the source node 101 wants to send a packet to the destination node 104. In PSN, however, mobile devices can utilize the mobility for data storage and transmission. Packet from 101 is sent to 102 at time t0 and then to node 103 at time t1. And at last the packet is sent to node 104 at time t2. Such dynamic link appearance and disappearance brought a lot of communication opportunities. But unfortunately most protocols assign stable values to routing metrics, which will make the end-to-end communication inefficient and impractical in mobile environment.

Actually it is difficult to design dynamic routing metrics for mobile computing due to lack of comprehension of links patterns. Little research focuses on the law of link appearance and disappearance. If one can predict future link appearance, communication mechanism between mobile devices should be optimized and a dynamic routing metric can be captured by the routing protocols if it is possible to do link prediction in mobile environment. Therefore, prediction in mobile computing is really fundamental in guaranteeing quality of service and user experience, but prediction is hard due to the lack of good understanding of human mobility.

Some previous work has given some hints about link likelihoods, which are used as routing metrics without verification of its rationality. Previous work has focused on link prediction in complex networks and social networks. They usually deal with the network as a static network graph. For example in WO 2003083695 A1, it regards the link prediction problem as a binary classification problem and it applied the support vector machine algorithm to predict even attributes. In addition, Linyuan et al. (Linyuan Lü, Tao Zhou, "Link prediction in complex networks: A survey", Physica A: Statistical Mechanics and its Applications, Volume 390, Issue 6, 15 March 2011, Pages 1150-1170, ISSN 0378-4371)have listed several static metrics between pairs and selected the top ranked ones for prediction.

Furthermore, mobile computing involving communication has demonstrated to exhibit various human specified attributes in complex or social networks such as power-law distribution and weak ties, which made it applicable to introduce some well performed link prediction methods in complex and social networks. Link prediction in complex networks has been classified into two parts: similarity-based algorithms and model-driven algorithms. Most of the similarity-based algorithms use some indices like common neighbors. They are simple to implement and perform especially well. The model-based algorithms optimize the performance but make computation complicated. All these prediction methods deal with the network as a static snapshot of history link accumulation and they predict the unknown links rather than the appearance of history links appearing and disappearing. So it is not feasible to directly use these indices in highly mobile systems.

There has been a great deal of demand for services with link prediction in mobile computing. These kinds of networks are especially suitable for large bulk of data transmission with high delay tolerance. For example, content sharing between mobile devices is a prospective application. If someone owns a paid film in his mobile phone but his friends also want to watch it. The friend has the option to pay tens of dollars for it or wait for several hours to get it. Most of the people will choose the later since it will save money. So content sharing by opportunistic networks is a prospective application. Also Han et al. (Han B, Hui P, Kumar V S A, et al. Mobile data offloading through opportunistic communications and social participation[J]. Mobile Computing, IEEE Transactions on, 2012, 11(5): 821-834) have proposed a mobile offloading system, which deploys opportunistic networks to relieve the overloading problem in 3G networks. For cellular traffic offloading tasks, it can select the target set and send the traffic to some node for content dissemination with opportunistic network. This system cannot only share heavy traffic of cellular networks, but also saves a lot of money for mobile users. Thus mobile offloading through opportunistic networks is also a tempting application in the future.

US 2009/0310485 A1 relates to systems and methods for effectively managing network communication employing multiple paths between sites.

Furthermore, energy consumption of mobile phones is a limiting factor in all these applications. In order to deliver the message to target users, several copies of messages will be disseminated through the network, which will exhaust devices' power soon. Such bad user experience will drive users to refuse cooperation in mobile computing environment.

Therefore, the present invention aims at directly predicting links in mobile computing environments. That is, the present invention is directed towards predicting links in scenarios like vehicular networks, opportunistic networks and human mobility.

## SUMMARY

The invention is specified in the claims.

According to one aspect of the present invention, a method and a system for link prediction in a mobile computing network is provided. The method preferably comprises breaking the mobile computing network into a sequence of snapshots at different times, each snapshot representing a link pattern of the mobile computing network. Furthermore, based on the snapshots the method provides historical link data, representing the history of connected nodes in the mobile computing network. In addition, based on the historical link data the method models the probability of links in the next snapshot of the mobile computing network using kernel regression. The method further comprises of evaluating the probability of links in the next snapshot to obtain a ranking of link probability and based on the results the method outputs the link probability for each individual link and/or the predicted link pattern in the next snapshot.

Preferably, the method for link prediction in a mobile computing network comprises evaluating one or more ranking indices.

In addition, for evaluating one or more ranking indices the method may use at least one of an Academic-Adar index and a contact frequency index.

Moreover, the step of providing historical link data may further comprise cataloguing them into direct contact logs and indirect contact logs.

Preferably, the direct contact logs comprise a dataset collected from Bluetooth™ and ad hoc Wi-Fi modules in mobile devices. These metadata can be directly used as input.

Even more preferably, the indirect contact logs may comprise data like GPS tracks and log files of Wi-Fi access points. These data do not contain direct links between pairs. So they need to be transformed into links with certain assumptions, for example that GPS points within 30 m or mobile devices logged on to the same access point at the same time can establish links.

Furthermore, the step of breaking the mobile computing network into a sequence of snapshots at different times may further comprise formalizing contacts in time duration into a network snapshot and a frequency matrix.

Preferably, modeling the probability of links in the next snapshot of the mobile computing network using kernel regression further comprises defining a feature set for the node pairs of the mobile computing network, modeling of data points of the mobile computing network using kernel regression, defining the distance between data points based on the result of kernel regression, dealing with sparse data in the obtained datasets according to the foregoing steps and designing low complexity algorithm by using a nearest neighbor search algorithm.

In addition, defining a feature set for the node pairs of the mobile computing network may further comprise selecting at least two preferred metrics for static link prediction and specifying pairs using these metrics.

Moreover, modeling of data points of the mobile computing network using kernel regression may further comprise dividing the snapshots into communities with two catalogs, i.e., non-overlapping community detection and overlapping community detection.

Preferably, non-overlapping community detection comprises algorithms that divide the mobile computing network into non-overlapping areas, i.e., nodes that only belong to one community in each snapshot.

More preferably, overlapping community detection comprises algorithms that divide the mobile computing network into overlapping areas, i.e. nodes may belong to several communities in each snapshot.

In addition, dividing the snapshots into communities with two catalogs further may further comprise transforming the communities into computable matrices.

Furthermore, defining the distance between data points may further comprise summing up the total variation distance, which measures the distance of two functions, between all elements.

Additionally, dealing with sparse data may further comprise enlarging the local community of a node and calculating the normal confidence interval for the probability estimation.

Preferably, designing low complexity algorithm by using a nearest neighbor search algorithm may further comprise converting the modeled points into bit sequences and using local sensitive hashing to lower the computation complexity.

On the one hand, a statistical model is established for future link prediction with history link data. A feature set is defined between node pairs. Two algorithms are provided to detect communities of the network. A matrix is identified by every node to represent its local community. A definition of the matrix distance is provided to measure the distance between points. A method dealing with sparse data is provided. On the other hand, an approximation algorithm is introduced to lower the complexity with some precision overhead. Experiments proved little loss of precision when the algorithm is deployed while the complexity is lowered much. The model for history links is established via kernel regression. Matrix that represents the local community of a node is used as a point in kernel regression. An algorithm for searching nearest matrix neighbors is designed with a distance definition. At last a method is introduced to evaluate the effectiveness of routing metrics.

The present invention is defined by the following claims, and nothing in this section should be taken as a limitation on those claims. Further aspects and advantages of the invention are discussed below in conjunction with the preferred embodiments.

## BRIEF DESCRIPTION OF THE DRAWINGS

FIG. 1 illustrates the framework of link prediction.
FIG. 2 illustrates an example of how opportunistic networks forward data.
FIG. 3 illustrates how to divide the network into snapshots.
FIG. 4 illustrates the detailed description on kernel regression based method.
FIG. 5 illustrates how to define the feature set of node pairs.
FIG. 6 illustrates the concept of kernel regression.
FIG. 7 illustrates how to model the points for kernel regression.
FIG. 8 illustrates link prediction system as implemented.

## DETAILED DESCRIPTION OF PREFERRED EMBODIMENTS

Some preferred embodiments are now described with reference to the drawings. For explanation purpose, various specific details are set forth, without departing from the scope of the present invention as claimed.

To avoid bad user experience as outlined above, the heterogeneous architecture which exploits link prediction is applied to improve user experience in such applications. For content sharing applications, this system can do the following: 1) notifications for users on whether content request can be satisfied or not and in what extent it can be satisfied; 2) selecting routing path for content holder if the request can be satisfied; 3) push recommendations for users on content they may be interested in and rank the accessibility of these contents. In mobile data offloading tasks, the system will minimize the transmission times by evaluating connectivity in these networks. According to link prediction, this system tells offloading tasks which nodes are the central of networks and which nodes are not accessible by opportunistic networks. In the end, the target set for offloading tasks will be selected and the inaccessible nodes will perform cellular transmission instead.

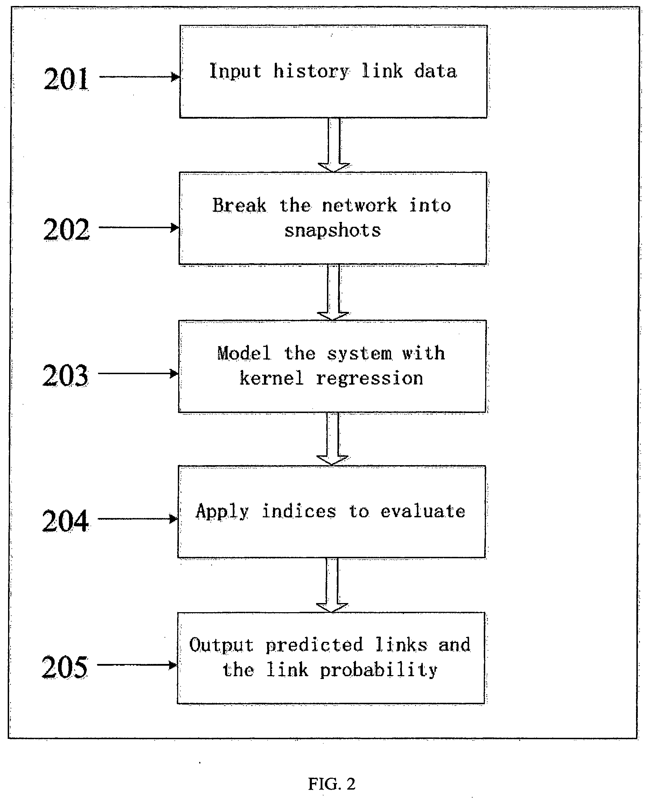

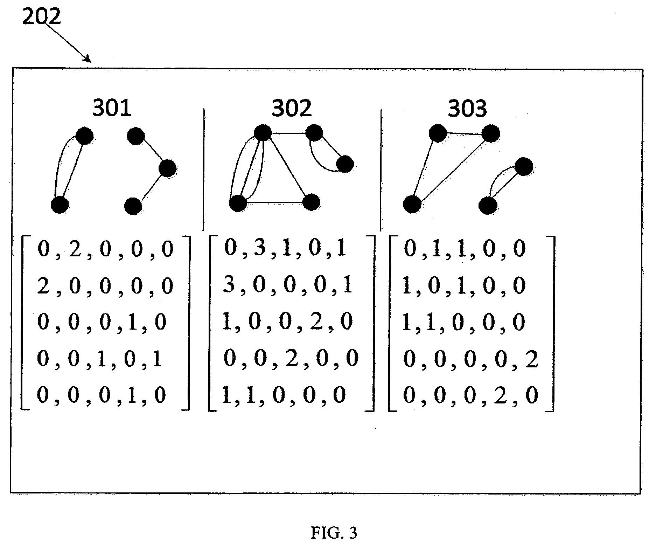

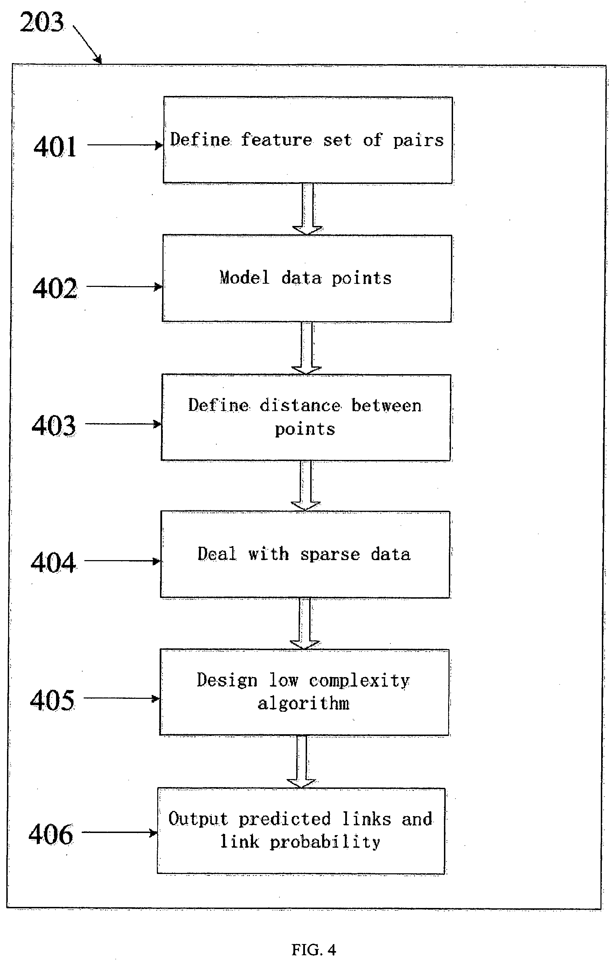

The present invention provides a prediction method in mobile computing having, in the illustrate embodiment, five general components, which is shown in FIG. 2. It includes the input (step 201) and output (step 205) components, which demonstrates that the system needs history connection as the basic input. After several steps, this method gets the result of predicted links and link probability. But it has to be noted that there might be some indirect contact files such as GPS logs and Wi-Fi access point connection logs in the input of history link data. Some corrections have to be made to these data, for example by assuming that GPS points within 30 m or mobile devices logged on to the same access point at the same time can establish links. Also it can be seen that in order to use the core method in step 203, history link patterns should be first divided into snapshots (step 202) at different times. In the end, it is evaluated on how much improvement could be achieved by evaluating some indices (step 204). In the following description, snapshots are first introduced in FIG. 3. The kernel regression steps are illustrated in FIG. 4.

In order to deal with dynamicity, according to step 202 of FIG. 2 the network is first divided into a sequence of snapshots (301, 302, 303...) as shown in FIG. 3. Each snapshot represents the contact pattern of the whole network in the corresponding time interval. There might be multiple edges between nodes because they may contact several times in the duration of a snapshot. As also shown in FIG. 3 snapshots can be replaced by a frequency matrix which documents the contact frequency of node pairs. The frequency matrix is actually an adjacent matrix M which documents how many edges between two node pairs (matrix shown in FIG. 3). If node 1 and node 2 connect two times in one snapshot, the $M[1][2]=2$. The times they connect with each other is called the contact frequency and the corresponding matrix of all node pairs is called the frequency matrix.

Step 203 of FIG. 2 requires modeling the system using kernel regression. The kernel regression based method contains five parts in FIG. 4, including defining feature set (step 401), modeling the point (step 402), defining the distance as shown in step 403, dealing with sparse data (step 404) and designing approximation algorithm (step 405). The steps will be described in the following in more detail.

DEFINE FEATURE SET (step 401)

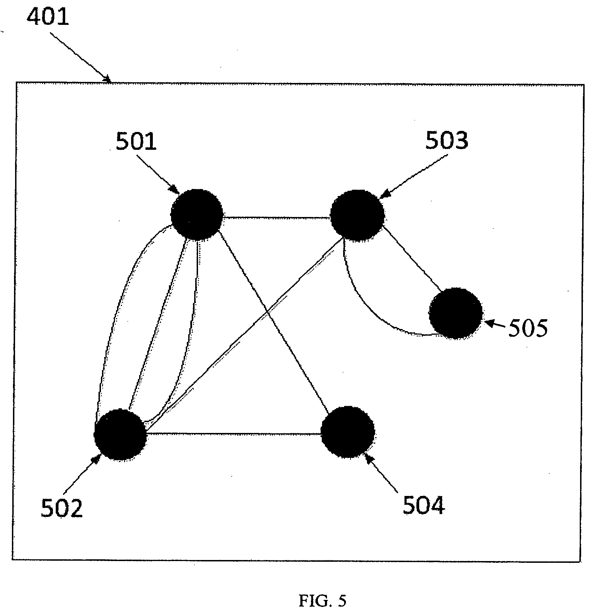

In each snapshot there is structural information, which is enough for the prediction of links in mobile computing. For example in FIG. 5 (a snapshot obtained in step 202), node 501 and node 502 can form attributes like common neighbors, the minimum hop count and their contact frequency. Here, the common neighbors between them are 2 (503 and 504); The minimum hop count is 1, which means that there are no relay nodes on the shortest path between node 501 and 502; The contact frequency is 3, which means they contacted three times during the time period of the snapshot. As a further example node 505 and 503 form the following attributes: 0 common neighbors, the minimum hop count is 1, and the contact frequency is 2. In static graph predicting decisions, these metrics are used as the ranking for they believe that the higher these indices, the higher the probability that they will establish links. So pairs ranking top will be selected as the links, which will most likely appear next.

In the kernel prediction framework, however, it is redundant to use too much structural information in static graphs. So the system preferably chooses some metrics with best performance. According to some experiments on snapshots of mobile datasets, Adamic-Adar (AA) and contact frequency are found to perform especially well. AA is a similarity based method for static link prediction. The basic idea for it is to count the common neighbors between two nodes with some weight. How much a common neighbor contributes to the ranking index for a pair is determined by the degree of this common neighbor. The higher the degree, the less this common neighbor contributes to the final ranking index. A detailed description of AA index can be found in Linyuan Lü, Tao Zhou, Link prediction in complex networks: A survey, Physica A: Statistical Mechanics and its Applications, Volume 390, Issue 6, 15 March 2011, Pages 1150-1170, ISSN 0378-4371. The contact frequency can directly show the possibility of links in that if a pair contacts very frequently in the current snapshot, they are very likely to communicate with each other in the future. These two indices are computed with little complexity and can achieve high accuracy in static snapshots. So it is reasonable to use them as a possible baseline to model the prediction system with kernel regression.

Since the best two ranking indices have been selected, a definition for the feature set of two nodes (i and j) at timestep $t_1$ can be defined. $f_t(i, j)=\{aa_t(i, j), cf_t(i, j)\}$, which is selected from a finite feature set $F$. Here $aa_t(i,j)$ and $cf_t(i, j)$ respectively represent the AA value and contact frequency between $i$ and $j$ in snapshot $G_t$. According to the assumption that the network structure features determine the linkage likelihood, two pairs at any snapshot will have similar link probability if they share the same feature set $f$. The only difference between them is determined by their local network structure. Defining $B_t(f)$ as the number of node pairs that have the same feature $f$ from the start time to current time $t$, and $B_t^+(f)$, the number of such pairs that have links in the next snapshot. Based on point estimation, future link probability of pairs in current snapshot $G_t$ should be:

$$p_t(i, j) = p(f_t(i, j)) = \beta_t(f) / \beta_t^+(f). \quad (1)$$

If the link probability is simply estimated this way, the probability would be very rough and inaccurate. In particular, many of the statistical data points can bring a lot of noise that will finally disturb the actual link probability. For example, some pairs that share the same feature have quite different local network structure, while others have a very similar structure, but they contribute the same in equation 1. So there should be some statistical method to correct this defect, which is introduced in the following.

MODEL DATA POINTS IN KERNEL REGRESSION (step 402)

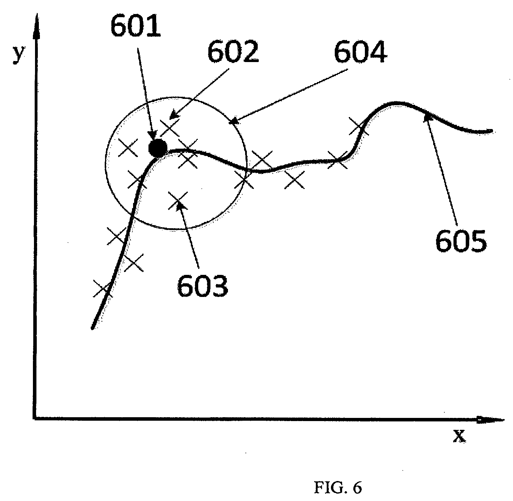

Kernel regression is a nonparametric statistical method for estimation. The aim is to find the non-linear relation between two variables. FIG. 6 illustrates how the kernel regression is used to estimate the unknown point 601. It is clear that line 605 is non-linear and cannot be represented by any function, which makes the estimation for the *y*-value of point 601 impossible. But in kernel regression, known points around the estimated point can be exploited to speculate the unknown one. There are many points like point 602 and point 603 around the unknown point 601. They have very similar *y*-value with point 601 and thus they can be used to estimate point 601.

However, as the points have different distances to the estimated point, they should have different contributions to the estimation. For example, point 602 is close to point 601, but point 603 is far from it. Therefore, more weight needs to be put on point 602's *y*-value than point 603. At last, after taking all the neighbors within circle 604 into consideration the estimated result for point 601's value is obtained. The main point in this estimation is to evaluate the closeness between data points. In mobile computing, link prediction actually falls into predicting the possibility of the link that will appear. Therefore, the estimated value should be the link probability. The closeness between links, however, is difficult to measure.

In nonparametric statistics there are many estimators for kernel regression. Actually most of them like Priestly-Chao, Grasser-Müller and Nadaraya-Watson kernel estimator can provide good estimations. The system of the invention takes the Nadaraya-Watson kernel estimator as an example to predict links. The most important thing in Nadaraya-Watson kernel estimation is to find the optimal kernel function, which can make the estimated value approximate the real value. Nadaraya-Watson kernel function is introduced here to put less weight on noisy data points and more weight on very close data points. The Nadaraya-Watson estimator reads:

$$\widehat{m}_h(x) = \frac{\sum_{i=1}^n K_h(x - X_i)Y_i}{\sum_{i+1}^n K_h(x - X_i)}, \qquad (2)$$

where $\widehat{m}_h(x)$ is the estimated value of $y$ when $X=x$. $K_h(x - X_i)$ is the kernel function with a bandwidth $h$. This function defines the closeness between current data point $(x, y)$ and the history point $(X_i, Y_i)$ and the bandwidth $h$ determines how smooth the estimating process will be. In this link prediction framework, the estimated probability is defined as:

$$\widehat{p}_t(i,j) = \frac{\sum_{x,y,t'} S\left(f_t(i,j), f_{t'}(x,y)\right) \cdot L_{t'+1}(x,y)}{\sum_{x,y,t'} S(f_t(i,j), f_{t'}(x,y))}, \qquad (3)$$

where $L_{t'+1}(x,y) = 1$ if x and $y$ have links at time $t' + 1$, otherwise $L_{t'+1}(x,y) = 0$. But it is challenging to evaluate each pair's (x and $y$) closeness to the current pair ($i$ and $j$) when taking the search complexity into consideration. Therefore, the kernel $S(\cdot)$ is redefined to simplify equation 3. Let $K(c_t(i,j), c_t'(x,y)) \cdot I_{f_t(i,j)}(f_t(x,y))$ denote $S(\cdot)$. Here $K(c_t(i,j), c_t(x,y))$ is the new kernel function and $c_t(i,j)$ will be explained later. So the $\widehat{p}_t(i,j)$ can be rewritten as:

$$\frac{\sum_{x,y,t'} K(c_t(i,j), c_{t'}(x)) \cdot I_{f_{t(i,j)}}(f_{t'}(x,y)) \cdot L_{t'+1}(x,y)}{\sum_{x,y,t'} K(c_t(i,j), c_{t'}(x,y)) \cdot I_{f_{t(i,j)}}(f_{t'}(x,y))}$$

$$= \frac{\sum_{x,y,t'} K(c_t(i), c_{t'}(x)) \cdot I_{f_{t(i,j)}}(f_{t'}(x,y)) \cdot L_{t'+1}(x,y)}{\sum_{x,y,t'} K(c_t(i), c_{t'}(x)) \cdot I_{f_{t(i,j)}}(f_{t'}(x,y))}$$

$$= \frac{\sum_{x,t'} K(c_t(i), c_{t'}(x)) \cdot \sum_y I_{f_{t(i,j)}}(f_{t'}(x,y)) \cdot L_{t'+1}(x,y)}{\sum_{x,t'} K(c_t(i), c_{t'}(x)) \cdot \sum_y I_{f_{t(i,j)}}(f_{t'}(x,y))}$$

$$= \frac{\sum_{x,t'} K(c_t(i), c_{t'}(x)) \cdot \beta_{it'}^+(f_t(i,j))}{\sum_{x,t'} K(c_t(i), c_{t'}(x)) \cdot \beta_{it'}(f_t(i,j))}, \qquad (4)$$

$$K\left(c_t(i), c_{t'}(x)\right) = \exp\left(-\frac{c_t(i) - c_{t'}(x)}{2h^2}\right). \qquad (5)$$

Here $K(c_t(i,j), c_t(x,y))$ is the Gaussian kernel in equation 4 and $c_t(i)$ is the community of node $i$ at time $t$. $\beta_{it'}(f_{t'}(x,y))$ is the number of pairs in $i$'s community at snapshot $t$ with feature $f_{t'}(x,y)$ while $\beta_{it'}^+(f_{t'}(x,y))$ is the number of such pairs that have a link in the next snapshot.

In the Gaussian kernel, there are two important parameters: the bandwidth $h$ and the distance between communities $c_t(i)$ and $c_t(x)$ ($|c_t(i) - c_t(x)|$). In the kernel regression, the bandwidth choice is vital because if $h$ is too large, the fit will be very smooth and if the $h$ is too small, the fit will be very rough. The optimal bandwidth lies in a certain range and we can achieve the optimal bandwidth through cross-validation score $cv = \widehat{R}(h) = \frac{1}{n}\sum_{i=1}^n (Y_i - \widehat{r}_{-i}(x_i))^2$ where $\widehat{r}_{-i}(x_i)$ is the estimator obtained by omitting the $i$th point (Wasserman, Larry. All of nonparametric statistics. Vol. 4. No. 6. New York: Springer, 2006).

As a matter of fact there are many community detection algorithms, which all can be applied to this system. These algorithms can be divided into two categories: non-overlapping community detection, e.g. CNM (Clauset, Aaron, Mark EJ Newman, and Christopher Moore. "Finding community structure in very large networks." Physical review E 70.6 (2004): 066111), and overlapping community detection, e.g. k-clique (Palla, Gergely, et al., "Uncovering the overlapping community structure of complex networks in nature and society." Nature 435.7043 (2005): 814-818). In a network with very large number of nodes, it is wise to use the non-overlapping community detection, because it is very time-efficient to detect communities and quantify communities as metrics to measure the community distance. If there are only a small number of nodes, the system should apply the overlapping community detection method to overcome the sparse data problem described in step 404. Furthermore, if there is strict demand for time complexity, real time community detection method should be applied (Leung, Ian XY, et al. "Towards real-time community detection in large networks." Physical Review E 79.6 (2009): 066107). Here, two algorithms are outlined as examples: CNM, a non-overlapping one, and k-clique, an overlapping algorithm. In CNM algorithm, it is assumed that a community in a snapshot should have more links among each other than with any other nodes of the graph. A good measure to quantify this is modularity. The definition of modularity is:

$$Q = \frac{1}{2m} \sum_{ij} \left[ l_{ij} - \frac{k_i k_j}{2m} \right] \delta(d_i, d_j), \quad (6)$$

where m is the number of links in the snapshot. $l_{ij}$=1 if there is a link between them, otherwise $l_{ij}$=0 and $\delta(d_i, d_j) = 1$ if $d_i = d_j$, which means $i$ and $j$ belong to the same community, otherwise $\delta(d_i, d_j) = 0$. This modularity Q indicates the rationality of community partition: the higher the Q, the better the communities are detected. The main idea in this algorithm is to find the maximum global modularity. But finding the optimal modularity is a NP-hard problem. Different from the algorithm described in WO 2003083695 A1, this prediction method uses a simulated annealing algorithm to approximate the optimal modularity. Initially all nodes belong to their own community and the nodes are converged to the same community with an exponential distribution. The near optimal modularity will be acquired after several iterations. Detailed description can be seen in Algorithm 1:

```
1   Initialize N communities, initialize the required number of samples numS
2   Allocate all N nodes to one of the N communities randomly
3   get Q₁ according to equation 6
4   i=1;
5   while   i<numS do
6       select a node n randomly
7       move n from its current community to another randomly chosen community
8       calculate new Qᵢ and ΔQ= Qᵢ − Qᵢ₋₁
9       if ΔQ≤0 then
10          accept the move of node with a probability of exp(ΔQ).
11          if accept the move then
12              i++
13          endif
14      endif
```

```
15      else
16          accept the move of node
17          i++
18      endelse
19  endwhile
20  output the final detected community
21  return
```

In the k-clique algorithm a good community, however, is defined as multiple sub graphs that have many common neighbors. And k-clique cliques are merged into a cluster. So in this kind of community partition, a single node may have the opportunity to belong to several communities and therefore this is an overlapping community detection method.

DEFINITION OF COMMUNITY DISTANCE (step 403)

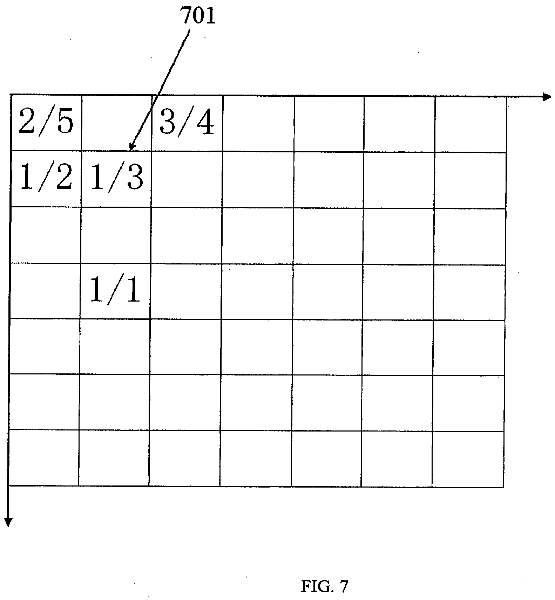

In communities, it is hard to define the distances between them, since they are not numerically identified. Like what has been described above, pairs in communities are also specified with structural feature sets, that is to say in the communities there are only feature sets without node numbers. Thus, it is possible to transform the community $c_t(i)$ to a two dimensional matrix representation: $c_t(i) = \{\beta_{it}(f), \beta_{it'}^+(f) \ \forall f \in F\}$ (FIG. 7). Here, this two dimensional matrix is indexed by the finite feature set **F**. Each element in this matrix contains two values: $\beta_{it}(f)$ and $\beta_{it'}^+(f)$. $\beta_{it}(f)$ is the number of pairs in $i$'s community at snapshot $t$ (with feature $f_t(x,y)$ while $\beta_{it'}^+(f)$ is the number of such pairs that have a link in the next timestep. Each element in $c_t(i)$ can compute the link probability $p(f)$ under feature $f$. The matrix is actually a two dimensional probability space. So the difference between matrices can be the total of all probability difference of each element. But such point estimation does not represent the variation in the probability well. Therefore, the posterior distribution of $p(f)$ is used instead and this is a beta distribution with the expectation of $\beta^+(f)/\beta(f)$, because the appearance of a link is a binomial distribution with parameter $p(f)$. So now each element in matrices is a beta distribution and we define the closeness of two matrices is defined as:

$$|c_t(i) - c_{t'}(x)| = \sum_{f \in F} \delta(\pi_1, \pi_2) \quad (7)$$

$$\pi_1 \sim B\left(\beta_{it}^+(f), \beta_{it} - \beta_{it}^+(f)\right)$$

$$\pi_2 \sim B\left(\beta_{xt'}^+(f), \beta_{xt'} - \beta_{xt'}^+(f)\right),$$

where $\delta(\pi_1, \pi_2)$ is the total variation distance which measures the distance of two functions. Combining (4)(5)(7), the link probability $\hat{p}_t(i,j)$ can be computed.

DEALING WITH SPARSE DATASET (step 404)

Link data is very sparse in many datasets, which makes the community matrix very sparse with many empty elements. Therefore, the community of a particular node should be extended with connected component. Now the local community of a node is the real community detected from CNM algorithm and the connected graph it belongs. Apart from this, the feature set should also be recounted for an approximation. When the matrix is constructed, the element should not only be the exact count of the corresponding feature $f$ but also the features within a circle with diameter $d$ around it. For example, the original value in $c_t(i)[2][2]$ (701 in FIG. 7) should be the number of node pairs with feature set <2, 2>. But if $d$ is set to 1, elements in features set $c_t(i)[1][2]$, $c_t(i)[2][1]$, $c_t(i)[2][3]$, and $c_t(i)[3][2]$ are also added to $c_t(i)[2][2]$. Thus, after adjustment the element should be 2/5.

Also, in the statistical data used herein there are only a small number of points, which results in estimated value deviation and some instability. To solve this problem, the final probability should introduce a confidence interval instead of a certain probability. Preferably, a 95% normal confidence interval is introduced to give a range of probability for the final results.

NEARST NEIGHBOR SEARCH ALGORITHM (step 405)

Actually, there is large number of points to be considered by the estimation method and therefore time consumption becomes an issue. To lower the computation complexity in this system, nearest neighbors of certain matrices need to be found. If some near neighbor points of the estimated one can be found, the time complexity would be lowered to a constant time complexity. Local sensitive hashing is such an algorithm to hash the similar items to the same table. For bit sequences' local sensitive hashing, items with small hamming distance will be hashed into the same table with high probability. That is to say, despite the fact that the algorithm cannot give accurate results, it can output the nearest neighbors in a very efficient way. The time complexity for table construction is linear while the return of the nearest neighbors is constant in time.

In the kernel regression model, in order to get the nearest matrices transforming the matrix into bit sequences is necessary. Each element in the matrix is represented by a continuous beta function, which can be equally divided into $n$ intervals. Each interval's probability mass $m$ is obtained by integrating. Now the continuous beta function can be represented as a discrete sequence $<m_1, m_2, m_3,...,m_n>$. Then it is easy to change this sequence into a bit sequence because each probability can be represent by $q$ bits, where the first $[mq]$ bits are set to 1, while the remaining ones are set to 0. At last, the whole matrix can be set as a bit sequence by placing each element orderly.

Algorithm 2 presents such a local-sensitive hashing (LSH) algorithm:

```
1  Input n+1 bit sequences <B₁, B₂, B₃...Bₙ, Bₙ₊₁>, an empty set S. Output Bₙ₊₁'s
   neareast neighborhoods set S.
2  int hashNum=35, count=0;
3  while count< hashNum
4      select random k bits as a hash function H_count
5      count++;
6  endwhile
7  count=0, m=0
8  while m<n
9      for count< hashNum;count++
10         store B_m in the hash table with hash key H_count(B_m)
11     endfor
12     count++;
13 endwhile
14 count=0;
15 while count<hashNum
16     store B_n+1 in the hash table with hash key H_count(B_m)
17     add sequences with the same hash key H_count(B_m) into S
18 endwhile
19 return
```

In this algorithm, there will be 35 different hash tables. Every point will find its position in these tables. The hash functions are easy to find because this algorithm selects several random bits as the hash key. So if the point has the same hash key with an existing point in the same position, they would be very close neighbors.

Until now, an estimated link probability has been achieved with low complexity, but there has been no evaluation on its accuracy (step 204). In other words, the method needs to rank the probabilities in a descending order. First, the top n probabilities (n is dependent on how many of the links you want to predict in the next timestep) are chosen. Those n corresponding pairs are regarded as the links in the next timestep. These links forms the predicted link pattern in the next timestep.

There are several metrics for evaluation of accuracy and two metrics are introduced as examples: an intuitive one and a cumulative one. Precision: *Precision = m/n,* which takes the ratio of correct edges (*m*) in the chosen number of edges (*n*). For convenience *n* is chosen to be the number of links in the next timestep. This index evaluates the top ranked links, which is very meaningful for direct link prediction.

Area under curve (AUC): The link prediction problem can be regarded as a binary classification problem in machine learning. The AUC score is equivalent to the probability of correct classification. For example, if a pair with link and a pair without link are chosen randomly, the AUC score is equivalent to the probability that these two pairs are correctly classified. So this index takes all the ranking pairs into consideration and evaluates them as a whole.

SYSTEM IMPLEMENTATION

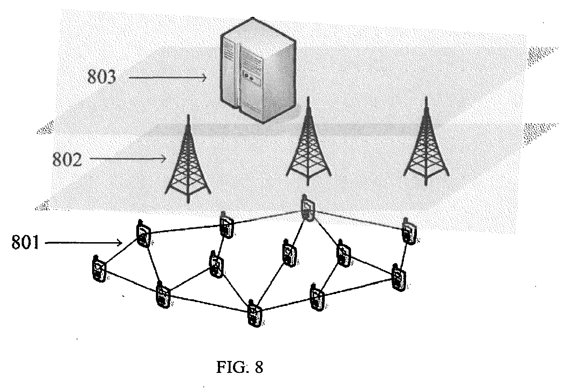

As shown in FIG. 8 the link prediction system is implemented with heterogeneous architecture: device-to-device layer 801, cellular networks layer 802 and server layer 803. Device-to-device layer is responsible for large bulk of data transmission while cellular networks are used for valuable information transmission. At the server layer, the centralized control and prediction is realized.

In the device-to-device layer, users with mobile phone networks form Ad-hoc networks. There are two types of physical design for communication: Wi-Fi and Bluetooth. The choice of the physical design is dependent on demand of transmissions. Usually the coverage of Wi-Fi is about 100 meters while Bluetooth can only reach 10 meters. Mobile phone users are often reluctant to open their Bluetooth module while keeping the Wi-Fi module on. These properties make the connections of Wi-Fi denser than Bluetooth. But the energy consumption of Wi-Fi networks is huge compared to Bluetooth. So if files transmitted through opportunistic networks are comparatively small and not so urgent, it is recommended to select Bluetooth as transmission device in order to save energy. But in other cases, it is recommended to use Wi-Fi for transmission.

Cellular networks layer is the bridge between the centralized server and mobile phone users. In general there are two types of information transmitted through cellular networks: 1) connection logs including Wi-Fi and Bluetooth are transmitted from mobile phones to the server. Acknowledgements of packets are sent to server; 2) servers push recommendations to mobile phone users via cellular networks before all messages are transmitted.

As to the server layer, it will predict future link patterns according to all history connection logs. These predicted link patterns will help the server to evaluate future quality of service. Also acknowledgements extracted from packet receivers will be sent to the server, which could help complete transmission of service content.

Other aspects, features, and advantages will be apparent from the summary above, as well as from the description that follows, including the figures and the claims.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

**Claims**

1. A method for link prediction in a mobile computing network comprising:

a) breaking the mobile computing network into a sequence of snapshots (301, 302, 303) at different times, each snapshot (301, 302, 303) representing a link pattern of the mobile computing network;
b) based on the snapshots (301, 302, 303) obtained in step a) providing historical link data, representing the history of connected nodes (501, 502, 503, 504, 505) in the mobile computing network;
c) based on the historical link data obtained in step b), modeling the probability of links in the next snapshot of the mobile computing network using kernel regression;
d) ranking of the obtained probability of links according to step c) in a descending order to obtain a link pattern in the next snapshot; and
e) based on the results obtained in step c) and d) outputting of the link probability for each individual link and/or the predicted link pattern in the next snapshot.

2. The method of claim 1, wherein the method for link prediction in a mobile computing network comprises evaluating one or more ranking indices.

3. The method of claim 2, wherein evaluating one or more ranking indices uses at least one of an Academic-Adar index and a contact frequency index.

4. The method of any of claims 1 to 3, wherein the step of providing historical link data comprises cataloguing them into direct contact logs, which can be directly used as input, and indirect contact logs, which do not contain direct links between node pairs.

5. The method of claim 4, wherein direct contact logs comprises a dataset collected from Bluetooth and ad hoc Wi-Fi module in mobile devices, wherein these metadata can preferably be directly used as input.

6. The method of claims 4 or 5, wherein indirect contact logs comprises data like GPS tracks and log files of Wi-Fi access points.

7. The method of any of claims 1 to 6, wherein breaking the mobile computing network into a sequence of snapshots (301, 302, 303) at different times comprises formalizing contacts in time duration into a network snapshot and a frequency matrix.

8. The method of any of claims 1 to 7, wherein modeling the probability of links in the next snapshot of the mobile computing network using kernel regression comprises:

   c1) defining a feature set for the node pairs of the mobile computing network;
   c2) modeling of data points of the mobile computing network using kernel regression;
   c3) defining the distance between data points according to step b);
   c4) dealing with sparse data in the obtained datasets according to steps c1) - c3); and
   c5) designing low complexity algorithm by using a nearest neighbor search algorithm;

9. The method of claim 8, wherein defining a feature set for the node pairs of the mobile computing network comprises selecting at least two preferred metrics for static link prediction and specifying pairs using these metrics.

10. The method of claims 8 to 9, wherein modeling of data points of the mobile computing network using kernel regression comprises dividing the snapshots (301, 302, 303) into communities with two catalogs: non-overlapping community detection; and overlapping community detection.

11. The method of claim 10, wherein non-overlapping community detection comprises algorithms that divide the mobile computing network into non-overlapping areas.

12. The method of claims 10 to 11, wherein overlapping community detection comprises algorithms that divide the mobile computing network into overlapping areas.

13. The method of any of claims 10 to 12, wherein dividing the snapshots (301, 302, 303) into communities with two catalogs further comprises transforming the communities into computable matrices.

14. The method of any of claims 8 to 13, wherein defining the distance between data points comprises summing up the total variation distance, which measures the distance of two functions, between all elements.

15. The method of any of claims 8 to 14, wherein dealing with sparse data comprises enlarging the local community of a node and calculating the normal confidence interval for the probability estimation.

16. The method of any of claims 8 to 15, wherein designing low complexity algorithm by using a nearest neighbor search algorithm comprises converting the modeled points into bit sequences and using local sensitive hashing to lower the computation complexity.

17. A system for link prediction in mobile computing configured to perform the method of any of the claims 1 to 16.

**Patentansprüche**

1. Verfahren zur Verbindungsvorhersage in einem mobilen Rechennetzwerk, das aufweist:

   a) Zerlegen des mobilen Rechennetzwerks in eine Folge von Momentaufnahmen (301, 302, 303) zu verschiedenen Zeiten, wobei jede Momentaufnahme (301, 302, 303) ein Verbindungsmuster des mobilen Rechennetzwerks darstellt;
   b) basierend auf den Momentaufnahmen (301, 302, 303), die in Schritt a) erhalten werden, Bereitstellen von historischen Verbindungsdaten, die die Historie verbundener Knoten (501, 502, 503, 504, 505) in dem mobilen Rechennetzwerk darstellen;
   c) basierend auf den historischen Verbindungsdaten, die in Schritt b) erhalten werden, Modellieren der Wahrscheinlichkeit von Verbindungen in der nächsten Momentaufnahme des mobilen Rechennetzwerks unter Verwendung von Kernel-Regression;
   d) Klassifizieren der erhaltenen Wahrscheinlichkeit von Verbindungen gemäß dem Schritt c) in einer abfallenden Reihenfolge, um ein Verbindungsmuster in der nächsten Momentaufnahme zu erhalten; und
   e) basierend auf den in Schritt c) und d) erhaltenen Ergebnissen Ausgeben der Verbindungswahrscheinlichkeit für jede einzelne Verbindung und/oder des vorhergesagten Verbindungsmusters in der nächsten Momentaufnahme.

2. Verfahren nach Anspruch 1, wobei das Verfahren zur Verbindungsvorhersage in einem mobilen Rechennetzwerk das Auswerten einer oder mehrerer Klassifizierungskennzahlen aufweist.

3. Verfahren nach Anspruch 2, wobei die Auswertung einer oder mehrerer Klassifizierungskennzahlen einen wissenschaftlichen Adar-Index und/oder einen Kontakthäufigkeitsindex verwendet.

4. Verfahren nach einem der Ansprüche 1 bis 3, wobei der Schritt der Bereitstellung historischer Verbindungsdaten ihr Katalogisieren in Direktkontaktprotokolle, die direkt als Eingabe verwendet werden können, und indirekte Kontaktprotokolle, die keine Direktverbindungen zwischen Knotenpaaren enthalten, aufweist.

5. Verfahren nach Anspruch 4, wobei Direktkontaktprotokolle einen Datensatz aufweisen, der über Bluetooth- und Ad-hoc-Wi-Fi-Module in mobilen Diensten gesammelt wird, wobei diese Metadaten vorzugsweise direkt als Eingabe verwendet werden können.

6. Verfahren nach Anspruch 4 oder 5, wobei indirekte Kontaktprotokolle Daten, wie GPS-Spuren und Protokolldateien von Wi-Fi-Zugangspunkten aufweisen.

7. Verfahren nach einem der Ansprüche 1 bis 6, wobei das Zerlegen des mobilen Rechennetzwerks in eine Folge von Momentaufnahmen (301, 302, 303) zu verschiedenen Zeiten das Formalisieren von Kontakten in der Zeitspanne in eine Netzwerkmomentaufnahme und eine Häufigkeitsmatrix aufweist.

8. Verfahren nach einem der Ansprüche 1 bis 7, wobei das Modellieren der Verbindungswahrscheinlichkeit in der nächsten Momentaufnahme des mobilen Rechennetzwerks unter Verwendung von Kernel-Regression aufweist:

   c1) Definieren eines Merkmalssatzes für die Knotenpaare des mobilen Rechennetzwerks;
   c2) Modellieren von Datenpunkten des mobilen Rechennetzwerks unter Verwendung von Kernel-Regression;
   c3) Definieren des Abstands zwischen Datenpunkten gemäß Schritt b);
   c4) Behandeln zerstreuter Daten in den erhaltenen Datensätzen gemäß den Schritten c1) - c3); und
   c5) Entwerfen eines gering komplexen Algorithmus unter Verwendung eines Nächster-Nachbar-Suchalgorithmus.

9. Verfahren nach Anspruch 8, wobei das Definieren eines Merkmalssatzes für die Knotenpaare des mobilen Rechennetzwerks das Auswählen von wenigstens zwei bevorzugten Metriken für die statische Verbindungsvorhersage und das Spezifizieren von Paaren unter Verwendung dieser Metriken aufweist.

10. Verfahren nach den Ansprüchen 8 bis 9, wobei das Modellieren von Datenpunkten des mobilen Rechennetzwerks unter Verwendung von Kernel-Regression das Teilen der Momentaufnahmen (301, 302, 303) in Gemeinschaften mit zwei Katalogen aufweist: die nichtüberlappende Gemeinschaftserfassung; und die überlappende Gemeinschaftserfassung.

**11.** Verfahren nach Anspruch 10, wobei die nichtüberlappende Gemeinschaftserfassung Algorithmen aufweist, die das mobile Rechennetzwerk in nicht überlappende Bereiche teilen.

**12.** Verfahren nach den Ansprüchen 10 bis 11, wobei die überlappende Gemeinschaftserfassung Algorithmen aufweist, die das mobile Rechennetzwerk in überlappende Bereiche teilen.

**13.** Verfahren nach einem der Ansprüche 10 bis 12, wobei das Teilen der Momentaufnahmen (301, 302, 303) in Gemeinschaften mit zwei Katalogen ferner das Transformieren der Gemeinschaften in berechenbare Matrizen aufweist.

**14.** Verfahren nach einem der Ansprüche 8 bis 13, wobei das Definieren des Abstands zwischen Datenpunkten das Summieren der totalen Variationsdistanz aufweist, die den Abstand von zwei Funktionen zwischen allen Elementen misst.

**15.** Verfahren nach einem der Ansprüche 8 bis 14, wobei die Handhabung von gestreuten Daten das Vergrößern der lokalen Gemeinschaft eines Knotens und das Berechnen des normalen Vertrauensintervalls für die Wahrscheinlichkeitsschätzung aufweist.

**16.** Verfahren nach einem der Ansprüche 8 bis 15, wobei das Entwerfen des gering komplexen Algorithmus durch einen Nächster-Nachbar-Suchalgorithmus das Konvertieren der modellierten Punkte in Bitfolgen und die Verwendung lokal empfindlichen Hashens aufweist, um die Rechenkomplexität zu verringern.

**17.** System zur Verbindungsvorhersage bei der mobilen Berechnung, das konfiguriert ist, um das Verfahren nach einem der Ansprüche 1 bis 16 durchzuführen.

**Revendications**

**1.** Procédé de prédiction de liens dans un réseau informatique mobile, comprenant :

a) la décomposition du réseau informatique mobile en une séquence d'instantanés (301, 302, 303) à des moments différents, chaque instantané (301, 302, 303) représentant un diagramme de liens du réseau informatique mobile ;
b) sur la base des instantanés (301, 302, 303) obtenus en étape a), délivrance de données historiques de liens, représentatives de l'historique des noeuds connectés (501, 502, 503, 504, 505) dans le réseau informatique mobile ;
c) sur la base des données historiques de liens obtenues en étape b), modélisation de la probabilité de liens dans l'instantané suivant du réseau informatique mobile en recourant à une régression par noyau ;
d) classement de la probabilité de liens obtenue suivant l'étape c) dans un ordre décroissant afin d'obtenir un diagramme de liens dans l'instantané suivant ; et
e) sur la base des résultats obtenus en étape c) et d), émission de la probabilité de lien pour chaque lien individuel et/ou du diagramme de liens prédit dans l'instantané suivant.

**2.** Procédé selon la revendication 1, où ledit procédé de prédiction de liens dans un réseau informatique mobile comprend l'évaluation d'un ou de plusieurs indices de classement.

**3.** Procédé selon la revendication 2, où l'évaluation d'un ou de plusieurs indices de classement recourt à un indice Academic Adar et/ou à un indice de fréquence de contact.

**4.** Procédé selon l'une des revendications 1 à 3, où l'étape de délivrance de données historiques de liens comprend le catalogage de celles-ci dans des fichiers de contacts directs pouvant être directement utilisés comme entrées, et dans des fichiers de contacts indirects ne contenant pas de liens directs entre des paires de noeuds.

**5.** Procédé selon la revendication 4, où les fichiers de contacts directs comprennent un ensemble de données recueillies de Bluetooth et d'un module spécifique dans des dispositifs mobiles, ces métadonnées pouvant de préférence être utilisées directement comme entrées.

**6.** Procédé selon la revendication 4 ou la revendication 5, où les fichiers de contacts indirects comprennent des données telles que pistes GPS et fichiers journaux de points d'accès Wi-Fi.

**7.** Procédé selon l'une des revendications 1 à 6, où la décomposition du réseau informatique mobile en une séquence d'instantanés (301, 302, 303) à des moments différents comprend la formalisation de contacts pendant une durée temporelle dans un instantané de réseau et une matrice de fréquences.

**8.** Procédé selon l'une des revendications 1 à 7, où la modélisation de la probabilité de liens dans l'instantané suivant du réseau informatique mobile en recourant à une régression par noyau comprend :

c1) la définition d'un ensemble de caractéristiques pour les paires de noeuds du réseau informatique mobile ;
c2) la modélisation de points de données du réseau informatique mobile en recourant à une régression par noyau ;
c3) la définition de la distance entre points de données suivant l'étape b) ;
c4) le traitement des données éparses dans les ensembles de données obtenus suivant les étapes c1) -c3) ; et
c5) la désignation d'un algorithme à faible complexité en recourant à un algorithme de recherche du plus proche voisin.

**9.** Procédé selon la revendication 8, où la définition d'un ensemble de caractéristiques pour les paires de noeuds du réseau informatique mobile comprend la sélection d'au moins deux métriques préférentielles pour la prédiction statique de liens et la spécification de paires recourant à ces métriques.

**10.** Procédé selon les revendications 8 et 9, où la modélisation de points de données du réseau informatique mobile recourant à une régression par noyau comprend la division des instantanés (301, 302, 303) en communautés à deux catalogues : la détection de communauté non chevauchante ; et la détection de communauté chevauchante.

**11.** Procédé selon la revendication 10, où la détection de communauté non chevauchante comprend des algorithmes divisant le réseau informatique mobile en zones non chevauchantes.

**12.** Procédé selon les revendications 10 et 11, où la détection de communauté chevauchante comprend des algorithmes divisant le réseau informatique mobile en zones chevauchantes.

**13.** Procédé selon l'une des revendications 10 à 12, où la division des instantanés (301, 302, 303) en communautés à deux catalogues comprend en outre la transformation des communautés en matrices calculables.

**14.** Procédé selon l'une des revendications 8 à 13, où la définition de la distance entre points de données comprend le calcul de la somme de la distance de variation totale mesurant la distance de deux fonctions entre tous les éléments.

**15.** Procédé selon l'une des revendications 8 à 14, où le traitement de données éparses comprend l'élargissement de la communauté locale d'un noeud et le calcul de l'intervalle de confidence normal pour l'estimation de probabilité.

**16.** Procédé selon l'une des revendications 8 à 15, où la désignation d'un algorithme à faible complexité en recourant à un algorithme de recherche du plus proche voisin comprend la conversion des points modélisés en séquences de bits et le recours à un hachage sensible à la similarité pour réduire la complexité de calcul.

**17.** Système pour la prédiction de liens dans un réseau informatique mobile, prévu pour exécuter le procédé selon l'une des revendications 1 à 16.

FIG. 1

FIG. 2

202

FIG. 3

FIG. 4

FIG. 5

FIG. 6

701

| 2/5 |     | 3/4 |     |     |     |     |
|-----|-----|-----|-----|-----|-----|-----|
| 1/2 | 1/3 |     |     |     |     |     |
|     |     |     |     |     |     |     |
|     | 1/1 |     |     |     |     |     |
|     |     |     |     |     |     |     |
|     |     |     |     |     |     |     |
|     |     |     |     |     |     |     |

FIG. 7

803 ⟶

802 ⟶

801 ⟶

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2003083695 A1

- US 20090310485 A1

**Non-patent literature cited in the description**

- **LINYUAN LÜ ; TAO ZHOU.** Link prediction in complex networks: A survey. *Physica A: Statistical Mechanics and its Applications,* 15 March 2011, vol. 390, ISSN 0378-4371, 1150-1170
- **HAN B ; HUI P ; KUMAR V S A et al.** Mobile data offloading through opportunistic communications and social participation[J. *Mobile Computing, IEEE Transactions,* 2012, vol. 11 (5), 821-834
- **WASSERMAN, LARRY.** All of nonparametric statistics. Springer, 2006, vol. 4

- **CLAUSET, AARON ; MARK EJ NEWMAN ; CHRISTOPHER MOORE.** Finding community structure in very large networks. *Physical review,* 2004
- **PALLA, GERGELY et al.** Uncovering the overlapping community structure of complex networks in nature and society. *Nature,* 2005, vol. 435 (7043), 814-818
- **LEUNG, IAN XY et al.** Towards real-time community detection in large networks. *Physical Review,* 2009